# EUROPEAN PATENT APPLICATION

(11) **EP 4 822 807 A1**
(43) Date of publication of application: **14.10.2026**
(21) Application number: 24900743.6
(22) Date of filing: 29.03.2024
(51) Int. Cl.: H01M 10/0585, H01M 10/052, H01M 50/105

(54) **ELASTIC SHEET FOR ALL-SOLID RECHARGEABLE BATTERY AND ALL-SOLID RECHARGEABLE BATTERY**

(30) Priority: 06.12.2023 KR 20230175956
(71) Applicant: SAMSUNG SDI CO., LTD., Yongin-si, Gyeonggi-do 17084 (KR)
(72) Inventor: KIM, Riyul, Yongin-si, Gyeonggi-do 17084 (KR); SHIN, Isaac, Yongin-si, Gyeonggi-do 17084 (KR); SUH, Kwang Jong, Yongin-si, Gyeonggi-do 17084 (KR); RYU, Young Gyoon, Yongin-si, Gyeonggi-do 17084 (KR)
(74) Representative: Michalski Hüttermann & Partner mbB
(86) International application number: PCT/KR2024/004046
(87) International publication number: WO 2025/121552

(57) **Abstract**

The elastic sheet for the all-solid rechargeable batteries has a thickness of 100 µm to 500 µm and strain of less than 10 % in a vacuum environment of 0.1 MPa.

## Description

### [Technical Field]

The present disclosure relates to an elastic sheet for an all-solid rechargeable battery and an all-solid rechargeable battery including the same.

### [Background Art]

A portable information device such as a cell phone, a laptop, a smart phone, and the like or an electric vehicle has used a rechargeable lithium battery having high energy density and easy portability as a driving power source. Recently, research has been actively conducted to use a rechargeable lithium battery with high energy density as a driving power source or power storage power source for hybrid or electric vehicles.

Because commercially available lithium rechargeable batteries use an electrolyte solution including a flammable organic solvent, there is a safety problem of an explosion or fire in an event of a collision or penetration. Accordingly, semisolid batteries or all-solid batteries that avoid the use of the electrolyte solutions are being proposed. The all-solid battery refers to a battery in which all materials are made up of solids, particularly a battery that uses solid electrolytes. These all-solid batteries are safe as there is no risk of the explosion due to electrolyte solution leakage, and have a merit of it being easy to manufacture thin batteries.

### [Disclosure]

### [Technical Problem]

An elastic sheet for an all-solid rechargeable battery and an all-solid rechargeable battery that suppress damage to the all-solid unit cell and improve charge and discharge efficiency and lifespan characteristics of the all-solid rechargeable battery are provided by relieving a stress transmitted to the all-solid unit cell and a stress generated in the all-solid unit cell when charging and discharging are repeated.

Additionally, as the all-solid unit cell stacked during battery manufacturing is exposed to a vacuum environment, even if the elastic sheet is deformed, it is possible to provide an elastic sheet for an all-solid battery and an all-solid rechargeable battery that suppress alignment distortion of the all-solid unit cells stacked in one direction.

### [Technical Solution]

One aspect provides an elastic sheet for an all-solid rechargeable battery with a thickness of 100 µm to 500 µm and a strain of 10 % or less in a vacuum environment of 0.1 MPa.

The thickness of the elastic sheet for the all-solid rechargeable battery may be 300 µm.

The strain may include the strain of the width of the elastic sheet for the all-solid rechargeable battery.

The elastic sheet for the all-solid rechargeable battery may include a foam.

The elastic sheet for the all-solid rechargeable battery may include a polymer resin, and the polymer resin may include polyacrylate, polyurethane, silicon, a fluorine-based polymer, polyether polyol, polyester polyol, polycarbonate polyol, copolymers thereof, or combinations thereof.

The polyacrylate may include a C1 to C20 alkyl acrylate, a hydroxy C1 to C20 alkyl acrylate, or a combination thereof.

The elastic sheet for the all-solid rechargeable battery may include more hollow particles.

The hollow particle may include 1 part by weight to 8 parts for 100 parts by weight of the polymer resin.

The hollow particle may be an inorganic hollow particle, an organic hollow particle, or a combination thereof, the inorganic hollow particle may include glass, a metal oxide, a metal carbide, a metal fluoride, or a combination thereof, and the organic hollow particle may include an acryl resin, a vinyl chloride resin, a urea resin, a phenol resin, or a combination thereof.

The average particle diameter D50 of the hollow particle may be 2 µm to 100 µm.

The elastic sheet for the all-solid rechargeable battery may further include elasticity particles, and the elasticity particles may include alkyl acrylate, olefin, butadiene, isoprene, styrene, acrylonitrile, copolymers thereof, or combinations thereof.

The elasticity particle may be included with 0.1 parts by weight to 5 parts by weight for 100 parts by weight of the polymer resin.

The average particle diameter D50 of the elasticity particle may be 10 nm to 900 nm.

The elastic sheet for the all-solid rechargeable battery may further include inorganic particles, and the inorganic particles may include alumina, titania, boehmite, sulfuric acid barium, calcium carbonate, phosphoric acid calcium, amorphous silica, mesoporous silica, fumed silica, crystalline glass particles, kaolin, talc, silica-alumina composite oxide particles, calcium fluoride, lithium fluoride, zeolite, molybdenum sulfide, mica, magnesium oxide, or combinations thereof.

The inorganic particle may include 0.001 parts by weight to 50 parts for 100 parts by weight of the polymer resin.

The elastic sheet for the all-solid rechargeable battery may further include an additive, and the additive may include an initiator, a cross-linking agent, a coupling agent, a stabilizer, an inert gas, or a combination thereof.

Also, another aspect provides an elastic sheet for an all-solid rechargeable battery with a thickness of 100 µm and a strain of 30 % or less in a vacuum environment of 0.1 MPa.

Also, another aspect provides an elastic sheet for an all-solid rechargeable battery with a thickness of 500 µm and a strain of 5 % or less in a vacuum environment of 0.1 MPa.

Also, another aspect provides an all-solid rechargeable battery including a plurality of unit cells including a solid electrolyte layer stacked in one direction; and the elastic sheet for the all-solid rechargeable battery placed between the plurality of unit cells.

A case that stores the plurality of unit cells and the elastic sheet for the all-solid rechargeable battery inside in a vacuum environment of 0.1 MPa may be further included.

### [Advantageous Effects]

According to an embodiment, by alleviating the stress transmitted to the all-solid unit cell and the stress generated in the all-solid unit cell when charging and discharging are repeated, the elastic sheet for the all-solid battery and all-solid rechargeable battery suppressing the damage to all-solid unit cells and improving the charge and discharge efficiency and lifespan characteristics of the all-solid rechargeable batteries are provided.

In addition, even if the elastic sheet placed between the all-solid unit cells stacked in one direction is exposed to a vacuum environment during the battery manufacturing, it is deformed below a certain level, so the alignment distortion of the all-solid unit cells may be suppressed.

### [Description of the Drawings]

FIG. 1 is a cross-sectional view showing an all-solid rechargeable battery according to an embodiment.
FIG. 2 is a cross-sectional view showing an all-solid rechargeable battery according to another embodiment.
FIG. 3 is a table showing experimental results confirming alignment distortion results of Experimental Example 2, Experimental Example 3, and Comparative Example 1.
FIG. 4 is a table showing experimental results confirming alignment distortion results of Experimental Example 4 and Comparative Example 2.
FIG. 5 is a table showing experimental results confirming alignment distortion results of an Experimental Example 5 and Comparative Example 3.

### [Mode for Invention]

Hereinafter, specific embodiments will be described in detail so that those of ordinary skill in the art can easily implement them. As those skilled in the art would realize, the described embodiments may be modified in various different ways, all without departing from the scope of the present disclosure.

The terminology used herein is used to describe embodiments only, and is not intended to limit the present disclosure. The singular expression includes the plural expression unless the context clearly dictates otherwise.

As used herein, "a combination thereof" refers to a mixture, a stack, a composite, a copolymer, an alloy, a blend, a reaction product, and the like of constituents.

Herein, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity, and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D50) of particles having a cumulative volume of 50 volume% in the particle size distribution. Also, unless otherwise defined, the average particle diameter may be taken by randomly measuring the size (a diameter or a length of a major axis) of about 20 particles in a scanning electron microscope image to obtain a particle size distribution and obtaining the diameter D50 of the particle with the cumulative volume of 50 volume% as the average particle diameter in the particle size distribution.

Here, "or" is not interpreted in an exclusive sense. For example, "A or B" is interpreted as including A, B, A+B, etc.

"Metal" is interpreted as a concept that includes general metals, transition metals, and semi-metals.

### An all-solid rechargeable battery

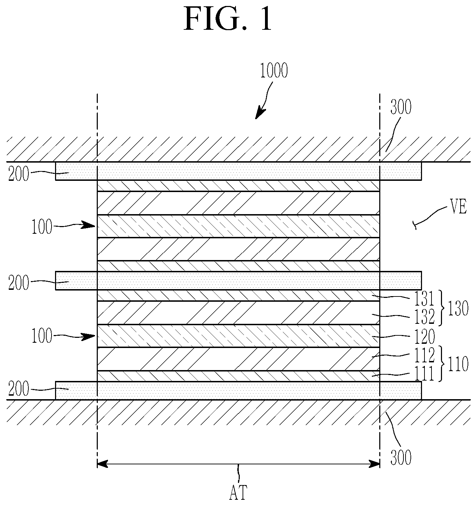

FIG. 1 is a cross-sectional view of an all-solid rechargeable battery according to an embodiment.

Referring to FIG. 1, an all-solid rechargeable battery 1000 according to an embodiment includes a structure in which a plurality of unit cells 100 including a negative electrode 110 of an anode including a negative current collector 111 and a negative active material layer 112, a solid electrolyte layer 120, and a positive electrode 130 of a cathode including a positive active material layer 132 and a positive current collector 131 is stacked in a direction (for example a vertical direction) is housed in a case 300 forming a vacuum environment (VE). The all-solid rechargeable battery 1000 further includes an elastic sheet 200 outside at least one of the positive electrode 130 and the negative electrode 110. The elastic sheet 200 may be positioned outside the plurality of unit cells 100 and between the plurality of unit cells 100, but it is not limited thereto. In FIG. 1, a stack of two unit cells 100 including the negative electrode 110, the solid electrolyte layer 120, and the positive electrode 130 is shown, but the stack is not limited to this and may include three or more unit cells 100. For example, the stack may include 2 to 100 unit cells 100, 3 to 50 unit cells 100, and 4 to 20 unit cells 100.

The all-solid rechargeable battery 1000 is manufactured by pressurizing the plurality of unit cells 100 in the manufacturing process, and may include a structure in which the charge and discharge proceed in the pressurized state. Here, the elastic sheet 200 may be expressed as a buffer layer or elasticity layer, the contact of the solid components included in the plurality of unit cells 100 is improved by ensuring that pressure is transmitted uniformly to the plurality of unit cells 100, it may also play a role in relieving the stress transmitted to the solid electrolyte layer, and play a role in suppressing the occurrence of cracks in the solid electrolyte layer due to the stress accumulation according to changes in the thickness of the electrode during the charge and discharge.

As shown in FIG. 1, the elastic sheet 200 may be positioned between the plurality of unit cells 100 and be positioned on the outermost layer of the plurality of unit cells 100. Considering that the thickness of the negative changes significantly during the charge and discharge due to a lithium electrodeposition or dendrite formation, the elastic sheet 200 may play a role in buffering problems due to the changes in the thickness by being positioned on the outside of the negative electrode 110, for example, on the opposite side of the surface in contact with the solid electrolyte layer 120 in the negative electrode 110. In addition, the elastic sheet 200 may prevent the degradation due to the reacting with lithium by being positioned outside the positive electrode 130 and/or the negative electrode 110, thereby obtaining an effect of increasing the Coulomb efficiency of the all-solid rechargeable battery.

The plurality of unit cells 100 stacked in one direction included in the all-solid rechargeable battery may be positioned within an align tolerance AT even if the elastic sheet 200 is deformed depending on the vacuum pressure. For example, the align tolerance AT of the plurality of unit cells 100 may include a maximum range that the alignment distortion value of the plurality of unit cells 100 may be tolerated in the battery in a horizontal direction that intersects the vertical direction in which plurality of unit cells 100 are stacked.

### An elastic sheet

In one embodiment, the elastic sheet for the all-solid rechargeable battery is provided with a thickness of 100 µm to 500 µm and a strain of 10 % or less in a vacuum environment of 0.1 MPa. The elastic sheet that satisfies these properties may effectively relieve the stress caused by the changes in the thickness during the charging and discharging of the all-solid rechargeable battery, improve the Coulomb efficiency and lifespan characteristics, and suppress the alignment distortion of the all-solid unit cells stacked in one direction.

The thickness of the elastic sheet is 100 µm to 500 µm, for example the thickness of the elastic sheet may be 300 µm, 100 µm, or 500 µm. For example, the thickness of the elastic sheet may vary depending on the positions between the plurality of unit cells stacked in one direction.

The strain of the elastic sheet may include the strain of the width of the elastic sheet in the vacuum environment of 0.1 MPa, but it is not limited thereto.

The elastic sheet may have the strain of 10 % or less in the vacuum environment of 0.1 MPa. Here, the strain may mean measuring the amount of the change in the width of the elastic sheet after positioning the elastic sheet from an atmospheric pressure of 45 degrees Celsius to the vacuum environment of 0.1 MPa. For example, the strain of the elastic sheet may be a value calculated through Equation 1 below. [Equation 1] 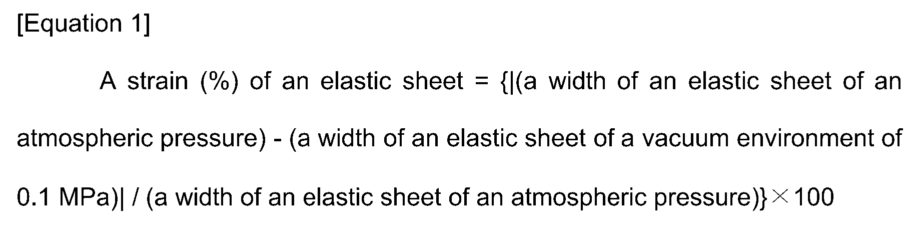 A strain (%) of an elastic sheet = {|(a width of an elastic sheet of an atmospheric pressure) - (a width of an elastic sheet of a vacuum environment of 0.1 MPa)| / (a width of an elastic sheet of an atmospheric pressure)}×100

For example, in the vacuum environment of 0.1 MPa, the strain of the elastic sheet may be 10 % or less when the elastic sheet thickness is 300 µm, 30 % or less when the elastic sheet thickness is 100 µm, or 5 % or less when the elastic sheet thickness is 500 µm.

If the elastic sheet satisfies the strain of the range, the stress changes due to the charge and discharge may be effectively alleviated while providing the appropriate compressive strength to the all-solid rechargeable battery, thereby simultaneously suppressing the alignment distortion of the all-solid unit cells stacked in one direction which improves the Coulomb efficiency and lifespan characteristics of the all-solid rechargeable battery.

The elastic sheet includes a polymer resin. Here, the type of the polymer resin is not particularly limited as long as the elastic sheet may satisfy the above-mentioned physical properties, but for example, it may include polyacrylate, polyurethane, silicon, a fluorine-based polymer, a polyether polyol, a polyester polyol, a polycarbonate polyol, a copolymer thereof, or a combination thereof.

The polyacrylate refers to a single polymer or a copolymer with an acryl group, and the polyurethane refers to a single polymer or a copolymer with a urethane group. The silicon may also be referred to as a silicon resin and refers to a single polymer or a copolymer including silicon, and the fluorine-based polymer refers to a single polymer or copolymer including fluorine. These polymers may exhibit appropriate elasticity, modularity, and compressive strain, thereby is suitable for use as the elastic sheet.

As the polymer resin, polyether polyol for polyurethane may be used. Polyether-based polyol preferably has a functional group count of 2 to 4 and a number average molecular weight of 2000 to 4000.

In addition to the polyether polyol, poly ester polyol may be used. As the polyester polyol, examples include those obtained by condensation of low molecular polyols such as ethylene glycol, diethylene glycol, propylene glycol, butanediol, hexanediol, glycerine, trimethylolpropane, trimethylolethane, pentaerythritol, diglycerin, sorbitol, and sucrose with succinic acid, sebacic acid, maleic acid, fumaric acid, phthalic acid, isophthalic acid, succinic acid anhydride, maleic anhydride, and phthalic acid anhydride. In addition, the polyester polyol include polyols that are ring-opening condensations of caprolactone and methyl valerolactone, which are classified as lactone esters. Examples of polycarbonate-based polyols include those obtained by de-alcohol reaction of polyhydric alcohols such as ethylene glycol, diethylene glycol, propylene glycol, butanediol, pentanediol, and hexanediol with di-alkyl carbonate, di-alkylene carbonate, and di-phenyl carbonate. It is more preferable that the number of functional groups is 2 to 3 and the number average molecular weight is 500 to 1000 (or hydroxyl group is 112 mg KOH/g to 224 mg KOH/g).

As a specific example, the polyacrylate may be derived from C1 to C20 alkyl acrylate, hydroxy C1 to C20 alkyl acrylate, or a combination thereof.

Here, C1 to C20 refers to the number of carbons in the alkyl group, and may be, for example, C1 to C18, C1 to C15, C1 to C12, C1 to C10, C1 to C8, or C1 to C5. Here, acrylate is a concept that includes acrylate and methacrylate.

The C1 to C20 alkyl acrylate, for example, may be methyl (meth)acrylate, ethyl (meth)acrylate, propyl (meth)acrylate, butyl (meth)acrylate, 2-ethylhexyl (meth)acrylate, 2-ethylpentyl (meth)acrylate, 2-ethylheptyl (meth)acrylate, 2-ethylnonyl (meth)acrylate, 2-propylhexyl (meth)acrylate, and 2-propyloctyl (meth)acrylate, or a combination thereof.

The hydroxy C1 to C20 alkyl acrylate, for example, may be 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, or a combination thereof.

For example, the acrylate resin may be derived from C1 to C20 alkyl acrylate and hydroxy C1 to C20 alkyl acrylate, and at this time, the mixing ratio of C1 to C20 alkyl acrylate and hydroxy C1 to C20 alkyl acrylate may be a weight ratio of 20:80 to 90:10, for example, 30:70 to 90:10 or 40:60 to 90:10, and the weight ratio may be 50:50 to 90:10 or 60:40 to 80:20. In this case, the acrylate resin may exhibit appropriate adhesion and is advantageous in realizing excellent compressive strength, stress relaxation rate, and recovery rate.

The acrylate resin may further include other repeating units derived from acrylic acid, alkoxy group-including acrylate, etc. Also, the weight average molecular weight of the acrylate resin may be 400,000 to 2,000,000, but is not limited thereto.

The elastic sheet may include a foam. It may include a foam with porosity of the elastic sheet.

The elastic sheet may further include hollow particles in addition to a polymer resin.

The hollow particle is a particle with an empty interior and may be expressed as a hollow sphere or a hollow bead, and may be a hollow nanoparticle or a hollow microparticle. If the elastic sheet includes hollow particles, the compressive strength may be increased while maintaining the appropriate density and a foam shape may be exhibited.

The hollow particle may be included as 1 part by weight to 8 parts by weight for the polymer resin at 100 parts by weight, for example, 1 part by weight to 7 parts by weight, or 2 parts by weight to 6 parts by weight may be included. When the hollow particles are included in these content ranges, it is advantageous to create a foam-type elastic sheet, and the compressive strength, the stress relief, and the restoration ability of the elastic sheet may be improved.

The hollow particle may be an inorganic hollow particle, an organic hollow particle, or a combination thereof. In other words, the hollow particle may be made of an inorganic material or may be made of an organic material such as a polymer.

The inorganic hollow particles may include, for example, glass, metal oxide, metal carbide, metal fluoride, or combinations thereof. Specifically, the inorganic hollow particle may be made of glass, silicon oxide, nickel oxide, barium oxide, platinum oxide, zinc oxide, aluminum oxide, zirconium oxide, iron oxide, titanium oxide, calcium carbonate, magnesium fluoride, or a combination thereof, and for example, the inorganic hollow particle may be a glass bubble.

The organic hollow particles may include, for example, acryl resin, vinyl chloride resin, urea resin, phenol resin, rubber, or combinations thereof. Additionally, the organic hollow particle may be an expansion-type or a non-expansion-type, and the expansion-type organic hollow particle may be one that expands at, for example, 120 °C to 150 °C.

The size D50 of the hollow particle may be for example a micro size, specifically 2 µm to 100 µm, 5 µm to 90 µm, 10 µm to 80 µm, or 20 µm to 70 µm. The hollow particles with these sizes are advantageous for making the foam-shaped elastic sheets, and may improve the compressive strength of the elastic sheet while lowering density and improving the stress relief and the resilience. Here, the size of the hollow particle may be expressed as an average particle diameter or a median particle diameter, and is measured with a particle size analyzer, and may mean the diameter D50 of the particles with a cumulative volume of 50 volume% in the particle size distribution.

The elastic sheet may further include elasticity particles in addition to the polymer resin. The elasticity particle may be a particle made of a polymer with elasticity such as a rubber. The elasticity particles may increase resilience while maintaining the stress relieving power of the polymer resin.

The elasticity particles may be included as 0.1 parts by weight to 5 parts by weight for the polymer resin at 100 parts by weight, for example, 0.5 parts by weight to 4 parts by weight, or 1 part by weight to 3 parts by weight.. When the elasticity particles are included in these content ranges, the compressive strength, the stress relief, and the restoring force may be maximized without reducing the density and adhesion of the polymer resin.

The elasticity particles may include, for example, polymers derived from natural rubber, alkyl acrylate, olefin, butadiene, isoprene, styrene, acrylonitrile, copolymers thereof, or combinations thereof. The elasticity particle may have a glass transition temperature of, for example, -70 °C to 0 °C.

The alkyl acrylate may be a C1 to C20 alkyl acrylate, for example, methyl methacrylate, ethyl methacrylate, propyl methacrylate, butyl methacrylate, 2-ethylhexyl methacrylate, 2-ethyl pentyl (meth)acrylate, 2-ethylheptyl (meth)acrylate, 2-ethylnonyl (meth)acrylate, 2-propylhexyl (meth)acrylate, and 2-propyloctyl (meth)acrylate, or a combination thereof.

The elasticity particle may include, for example, poly alkyl acrylate, ethylene-propylene-diene rubber, butadiene rubber, isoprene rubber, styrene-butadiene rubber, styrene-isoprene rubber, acrylonitrile-butadiene rubber, or combinations thereof.

The elasticity particle may have a core-shell structure, for example, and in this case, it is advantageous to exhibit the appropriate size and elasticity. The core and shell may each include poly alkyl acrylate, for example, the core may include poly butyl (meth)acrylate, and the shell may include polymethyl (meth)acrylate. In this case, dispersion within the elastic sheet composition is excellent, and the compressive strength, stress relief, and resilience of the elastic sheet may be improved.

The elasticity particle may be a nano size for example. Specifically, the size D50 of the elasticity particle may be 10 nm to 900 nm, for example, 10 nm to 700 nm, 50 nm to 500 nm, or 100 nm to 400 nm. The elasticity particles that satisfy these sizes have the excellent dispersion within the elastic sheet composition and may increase the resilience while maintaining the stress relieving ability of the elastic sheet. Here, the size of the elasticity particle may be expressed as an average particle diameter or a median particle diameter, and be measured with a particle size analyzer, and may mean the diameter D50 of a particle with a cumulative volume of 50 volume% in the particle size distribution.

The elastic sheet may further include inorganic particles. In this case, the recovery rate may be simultaneously improved while improving the modulus and compressive strength of the elastic sheet.

The inorganic particles include, for example, alumina, titania, boehmite, sulfuric acid barium, calcium carbonate, phosphoric acid calcium, amorphous silica, mesoporous silica, fumed silica, crystalline glass particle, kaolin, talc, silica-alumina composite oxide particle, calcium fluoride, lithium fluoride, zeolite, molybdenum sulfide, mica, magnesium oxide, or combinations thereof.

The inorganic particles may be included, for example, at 0.001 parts by weight to 50 parts by weight, for example, 0.01 parts by weight to 45 parts by weight, or 0.1 parts by weight to 40 parts by weight with respect to the polymer resin at 100 parts by weight. In this case, the compressive strength, stress relaxation rate, and recovery rate of the elastic sheet may be improved without deteriorating the characteristics of the polymer resin.

The average particle diameter of the inorganic particle may be 0.1 µm to 2 µm, for example, 0.1 µm to 1.5 µm, or 0.2 µm to 1.0 µm. The average particle diameter is measured using a laser scattering particle size distribution meter, and may mean a median particle diameter D50 when 50 % is accumulated from the particle side in a volume conversion.

The elastic sheet may further include appropriate additives in addition to the components described above, for example, an initiator, a cross-linking agent, a coupling agent, a foaming agent, etc. Additionally, in order to manufacture the foam-type elastic sheet, the elastic sheet may include an inert gas such as nitrogen or argon in addition to or together with the foaming agent.

Each additive may be included with an appropriate amount according to the purpose, for example, 0.001 parts by weight to 20 parts by weight for 100 parts by weight of the polymer resin, for example, it may be included as 0.01 parts by weight to 10 parts by weight, 0.1 parts by weight to 5 parts by weight, or 1 part by weight to 3 parts by weight.

### A solid electrolyte layer

In the all-solid rechargeable battery according to an embodiment, the solid electrolyte layer 120 may include inorganic solid electrolytes such as sulfide-based solid electrolytes and oxide-based solid electrolytes.

For example, the solid electrolyte layer 120 may include a sulfide-based solid electrolyte with excellent ion conductivity. The sulfide-based solid electrolyte particle, for example, may include Li₂S-P₂S₅, Li₂S-P₂S₅-LiX (X is a halogen element, for example, I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m, n are an integer, respectively, Z is Ge, Zn, or Ga), Li₂S-GeS₂, Li₂S-SiS₂-Li₃PO₄, Li₂S-SiS₂-LiₚMO_{q} (p, q are an integer, respectively, M is P, Si, Ge, B, Al, Ga, or In), or combinations thereof.

The sulfide-based solid electrolyte may be obtained, for example, by mixing Li₂S and P₂S₅ at a mole ratio of 50:50 to 90:10, or 50:50 to 80:20 and performing selective heat treatment. In the mixing ratio range, the sulfide-based solid electrolytes with excellent ion conductivity may be produced. Here, as another component, by further including SiS₂, GeS₂, B₂S₃, the ion conductivity may be further improved.

A mechanical milling or a solution method may be applied as a mixing method of sulfur-including raw materials to produce the sulfide-based solid electrolyte. The mechanical milling is a method of making starting materials into particulates and mixing the same by putting the starting materials, ball mills, and the like in a reactor and intensely stirring them. In the solution method, starting materials may be mixed in a solvent to obtain a solid electrolyte as a precipitate. Furthermore, if heat treatment is performed after mixing, crystals of the solid electrolyte can become more rigid and ionic conductivity can be improved. As an example, the sulfide-based solid electrolyte can be manufactured by mixing sulfur-containing raw materials and heat-treating them two or more times. In this case, a sulfide-based solid electrolyte with high ionic conductivity and rigidity may be manufactured.

According to one embodiment, the sulfide-based solid electrolyte may be manufactured for example through a first heat treatment for mixing the sulfur-containing raw material and firing it at 120 °C to 350 °C and a second heat treatment for mixing a first heat treatment result product and firing it at 350 °C to 800 °C. The first heat treatment and the second heat treatment may be performed in an inert gas or nitrogen atmosphere, respectively. The first heat treatment may be performed for 1 hour to 10 hours, and the second heat treatment may be performed for 5 hours to 20 hours. Through the first heat treatment, an effect of milling small raw materials may be obtained, and through the second heat treatment, the final solid electrolyte may be synthesized. Through two or more heat treatments like this, a high-performance sulfide-based solid electrolyte with high ion conductivity and robustness may be obtained, and such a solid electrolyte may be said to be suitable for mass production. The temperature of the first heat treatment may be, for example, 150 °C to 330 °C, or 200 °C to 300 °C, and the temperature of the second heat treatment may be, for example, 380 °C to 700 °C, or 400 °C to 600° C.

As an example, the sulfide-based solid electrolyte particles may include an argyrodite-type sulfide. The argyrodite-type sulfide can be represented by, for example, Chemical Formula of LiₐM_{b}P_{c}S_{d}Aₑ (a, b, c, d, and e are all 0 or greater and 12 or less, M is Ge, Sn, Si, or a combination thereof, and A is F, Cl, Br, or I), and specifically, can be represented by a Chemical Formula of Li₇₋ₓPS₆₋ₓAₓ (x is 0.2 or greater and 1.8 or less, and A is F, Cl, Br, or I). The argyrodite-type sulfide may be specifically Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, or the like.

A sulfide-based solid electrolyte particle containing such argyrodite-type sulfide has high ionic conductivity close to about 10⁻⁴ to about 10⁻² S/cm, which is ionic conductivity of a general liquid electrolyte, at room temperature, and thus can form a close bond between the positive active material and the solid electrolyte, and further, a close interface between the electrode layer and the solid electrolyte layer without deteriorating the ionic conductivity. An all-solid battery including the same may exhibit improved battery performance such as rate characteristics, Coulombic efficiency, and life characteristics.

The argyrodite-type sulfide-based solid electrolyte can be manufactured by, for example, mixing lithium sulfide, phosphorus sulfide, and optionally lithium halide. After mixing them, heat treatment may be performed. The heat treatment may include, for example, two or more heat treatment steps. Here, manufacturing the argyrodite-type sulfide-based solid electrolyte, for example, may include a first heat treatment for mixing a raw material and firing it at 120 °C to 350 °C, and a second heat treatment for mixing the first heat treatment result again and firing it at 350 °C to 800 °C.

The solid electrolyte layer 120 further includes an oxide-based inorganic solid electrolyte. The oxide-based inorganic solid electrolyte may include, for example, Li₁₊ₓTi₂₋ₓAl (PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), PB (Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y} PO₄₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, or garnet-based ceramics Li₃₊ₓLa₃M₂O₁₂ (M= Te, Nb, or Zr; x is an integer from 1 to 10), or combinations thereof.

The solid electrolyte is in a particle form, and the average particle diameter D50 of the particle may be 5.0 µm or less, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm. The solid electrolyte may be elementary particles of 0.1 µm to 1.9 µm, large particles of 2.0 µm to 5.0 µm, or a mixture thereof. The average particle diameter of the sulfide-based solid electrolyte particle may be measured using a microscope image. For example, a particle size distribution may be obtained by measuring sizes of about 20 particles in a scanning electron microscope image, and D50 may be calculated from the particle size distribution.

Meanwhile, the average particle diameter D50 of the solid electrolyte included in the solid electrolyte layer 120 may be larger than the average particle diameter D50 of the solid electrolyte included in the positive electrode 130. In this case, the overall performance may be improved by maximizing the energy density of the all-solid rechargeable battery and increasing the mobility of lithium ions. For example, the average particle diameter D50 of the solid electrolyte included in the positive electrode 130 may be 0.1 µm to 1.9 µm, or 0.1 µm to 1.0 µm, and the average particle diameter D50 of the solid electrolyte included in the solid electrolyte layer 120 may be 2.0 µm to 5.0 µm, 2.0 µm to 4.0 µm, or 2.5 µm to 3.5 µm. When the above particle diameter ranges are satisfied, the energy density of the all-solid secondary battery is maximized and the transfer of lithium ions is facilitated, making it possible to suppress resistance and thus to improve the overall performance of the all-solid secondary battery.

The solid electrolyte layer may further include a binder, in addition to the solid electrolyte. The binder, for example, may include a nitrile-butadiene rubber, a hydrogenated nitrile-butadiene rubber, styrene-butadiene rubber, acrylated styrene-butadiene rubber, acrylonitrile-butadiene rubber, acryl rubber, butyl rubber, fluorine rubber, polydimethylsiloxane, polyethylene oxide, polyvinylpyrrolidone, polyvinylpyridine, chlorosulfonated polyethylene, polyvinyl alcohol, polytetrafluoroethylene, polyvinylidene fluoride, polyvinylidene fluoride-hexafluoropropylene copolymer, polyvinylchloride, carboxylated polyvinylchloride, polyvinylfluoride, polyethylene, polypropylene, ethylene propylene copolymer, ethylene propylene diene copolymer, polyamideimide, polyimide, poly(meth)acrylate, polyacrylonitrile, polystyrene, polyurethane, or combinations thereof.

The solid electrolyte layer 120 may be formed by adding a solid electrolyte to a binder solution, coating a base film with the solution, and drying the resultant. The solvent for the binder solution may be isobutyryl isobutyrate, xylene, toluene, benzene, hexane, or a combination thereof. A process of forming the solid electrolyte layer is widely known in the art, and therefore, a detailed description will be omitted.

The solid electrolyte layer 120 may further include an alkali metal salt, and/or an ionic liquid, and/or a conductive polymer.

The alkali metal salt may be, for example, a lithium salt. A content of the lithium salt in the solid electrolyte layer may be 1 M or more, for example, 1 M to 4 M. In this case, the lithium salt can improve ionic conductivity by improving lithium ion mobility in the solid electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB C₂O₄₂, LiBF₄, LiBF₃ C₂F₅, lithium bis(oxalato) borate (LiBOB), lithium oxalyl difluoro borate (LIODFB), lithium difluoro(oxalato) borate (LiDFOB), lithium bis(trifluoro methanesulfonyl)imide, LiTFSI, LiN(SO₂CF₃)₂), lithium bis(fluorosulfonyl)imide (LiFSI, LiN(SO₂F)₂), LiCF₃SO₃, LiAsF₆, LiSbF₆, LiClO₄, or a mixture thereof.

Furthermore, the lithium salt may be an imide-based salt. For example, the imide-based lithium salt may include lithium bis(trifluoro methanesulfonyl)imide, LiTFSI, LiN(SO₂CF₃)₂), lithium bis(fluorosulfonyl)imide, LiFSI, or LiN(SO₂F)₂). The lithium salt may maintain or improve ionic conductivity by appropriately maintaining chemical reactivity with an ionic liquid.

The ionic liquid refers to a salt or a room temperature molten salt that has a melting point equal to or lower than a room temperature, is in a liquid state at room temperature and is composed of only ions.

The ionic liquid may be a compound including a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, and triazolium-based cations and a mixture thereof, and b) one or more anions selected from BF₄-, PF₆-, AsF₆-, SbF₆-, AlCl₄-, HSO₄-, ClO₄-, CH₃SO₃-, CF₃CO₂-, Cl-, Br-, I-, BF₄-, SO₄-, CF₃SO₃-, FSO₂₂N-, (C₂F₅SO₂)2N-, (C₂F₅SO₂, CF₃SO₂)N-, and (CF₃SO₂)₂N-.

The ionic liquid may be, for example, selected from the group consisting of N-methyl-N-propyl pyrrolidinium bis(trifluoromethane sulfonyl)imide, N-butyl-N-methyl pyrrolidinium bis(3-trifluoromethylsulfonyl)imide, 1-butyl-3-methylimidazolium bis(trifluoromethylsulfonyl)amide, and 1-ethyl-3-methylimidazolium bis(trifluoromethyl sulfonyl)amide.

A weight ratio of the solid electrolyte and the ionic liquid in the solid electrolyte layer may be 0.1:99.9 to 90:10, for example, 10:90 to 90:10, 20:80 to 90:10, 30:70 to 90:10, 40:60 to 90:10, or 50:50 to 90:10. The solid electrolyte layer that satisfies the above ranges can maintain or improve ionic conductivity by improving the electrochemical contact area with the electrode. Accordingly, the energy density, discharge capacity, rate characteristics, and the like of the all-solid battery can be improved.

### A negative electrode

The negative electrode for an all-solid battery may include, for example, a current collector and a negative active material layer positioned on the current collector.

The negative active material layer includes a negative active material and may further include a binder and/or a conductive material.

The negative active material may include a material capable of reversibly intercalation/deintercalation of lithium ions, lithium metal, an alloy of lithium metal, a material capable of being doped and dedoped with lithium, or a transition metal oxide.

The material capable of reversibly intercalating/deintercalating lithium ions is a carbon-based negative active material, and may include, for example, crystalline carbon, amorphous carbon, or a combination thereof. Examples of the crystalline carbon may include graphite such as amorphous, plate-like, flake-like, spherical, or fibrous natural graphite or artificial graphite, and examples of the amorphous carbon may include soft carbon or hard carbon, mesophase pitch carbide, fired coke, and the like.

For the alloy of the lithium metal, an alloy of lithium and one or more selected from Na, K, Rb, Cs, Fr, Be, Mg, Ca, Sr, Si, Sb, Pb, In, Zn, Ba, Ra, Ge, Al, and Sn may be used.

For the material capable of being doped or undoped on the lithium, a silicon-based negative active material or a Sn-based negative active material may be used. Examples of the Si-based negative active material may include silicon, silicon-carbon composite, SiOₓ (0<x<2), and a Si-Q alloy (Q is an element selected from the group consisting of alkali metals, alkali earth metals, Group 13 elements, Group 14 elements, Group 15 elements, Group 16 elements, transition metals, rare-earth elements, and combinations thereof, but is not Si). Examples of the Sn-based negative active material may include Sn, SnO₂, a Sn_R alloy (R is an element selected from the group consisting of alkali metals, alkali earth metals, Group 13 elements, Group 14 elements, Group 15 elements, Group 16 elements, transition metals, rare-earth elements, and combinations thereof, but is not Sn). In addition, a mixture of at least one thereof and SiO₂ may be used. The elements Q and R may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

For example, the negative active material may include silicon-carbon composite particles. The average particle diameter D50 of the silicon-carbon composite particle may be, for example, 0.5 µm to 20 µm. The average particle diameter D50 is measured with a particle size analyzer and refers to the diameter of a particle with a cumulative volume of 50 volume% in the particle size distribution. For 100 wt% of the silicon-carbon composite particle, silicon may be included from 10 wt% to 60 wt% and carbon may be included from 40 wt% to 90 wt%. The silicon-carbon composite particle may include, for example, a core including a silicon particle, and a carbon coating layer positioned on the surface of the core. The average particle diameter D50 of the silicon particle in the core may be 10 nm to 1 µm, or 10 nm to 200 nm. The silicon particle may exist as silicon alone, in a form of a silicon alloy, or in an oxidized form. The oxidized form of silicon may be expressed as SiOₓ (0<x<2). Additionally, the thickness of the carbon coating layer may be about 5 nm to 100 nm.

For example, the silicon-carbon composite particle may include a core including silicon particles and crystalline carbon, and a carbon coating layer positioned on the surface of the core and containing amorphous carbon. For example, in the silicon-carbon composite particle, amorphous carbon may not exist in the core but only in the carbon coating layer. The crystalline carbon may be artificial graphite, natural graphite or a combination thereof, and the amorphous carbon may be formed from coal pitch, mesophase pitch, petroleum pitch, coal-based oil, petroleum-based heavy oil, or polymer resin (phenol resin, furan resin, polyimide resin, etc.). At this time, with respect to 100 wt% of the silicon-carbon composite particle, the content of the crystalline carbon may be 10 wt% to 70 wt%, and the content of the amorphous carbon may be 20 wt% to 40 wt%.

In the silicon-carbon composite particle, the core may include voids in the central portion. The radius of the void may be 30 length% to 50 length% of the radius of the silicon-carbon composite particle.

The aforementioned silicon-carbon composite particles effectively suppress problems such as volume expansion, structural collapse, or particle crushing due to the charge and discharge, and therefore, a conductive path disconnection may be prevented, high-capacity and high efficiency may be realized, and the use in high voltage or high-speed charge conditions is advantageous.

The Si-based negative active material or Sn-based negative active material may be used by mixing with a carbon-based negative active material. A mixing ratio of the Si-based negative active material or Sn-based negative active material and the carbon-based negative active material may be 1:99 to 90:10 by weight ratio.

The content of the negative active material in the negative active material layer may be 95 wt% to 99 wt% with respect to the total weight of the negative active material layer.

In an exemplary embodiment, the negative active material layer further includes a binder, and optionally, may further include a conductive material. A content of the binder in the negative active material layer may be 1 wt% to 5 wt% with respect to the total weight of the negative active material layer. In addition, when a conductive material is further included, the negative active material layer may include 90 wt% to 98 wt% of the negative active material, 1 wt% to 5 wt% of the binder, and 1 wt% to 5 wt% of the conductive material.

The binder serves to adhere the negative active material particles to each other and also to adhere the negative active material to the current collector. The binder may include a water-insoluble binder, a water-soluble binder, or a combination thereof.

Examples of the water-insoluble binder may include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

Examples of the water-soluble binder may include a rubber-based binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluoro rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, alkali metal salts thereof, or a combination thereof. As the alkali metal, Na, K, or Li may be used. An amount of the thickener used may be 0.1 to 3 parts by weight with respect to 100 parts by weight of the negative active material.

The conductive material is used to provide conductivity to an electrode, and for the battery being constructed, any electron conductive material may be used as long as it does not cause chemical changes, and may include, for example, a carbon-based material such as natural graphite, artificial graphite, carbon black, acetylene black, Ketjen black, a carbon fiber, and a carbon nanotube; a metal-based material in the form of metal powder or metal fiber including copper, nickel, aluminum, silver, and the like; a conductive polymer such as a polyphenylene derivative; or a mixture thereof.

The negative current collector may include one selected from a copper foil, a nickel foil, a stainless steel foil, a titanium foil, a nickel foam, a copper foam, a polymer substrate coated with a conductive metal, and a combination thereof.

As another example, the negative electrode for an all-solid battery may be a precipitation-type negative electrode. The precipitation-type negative electrode refers to a negative electrode which does not include a negative active material during assembling of a battery but in which lithium metal or the like is precipitated during charging of the battery and serves as a negative active material.

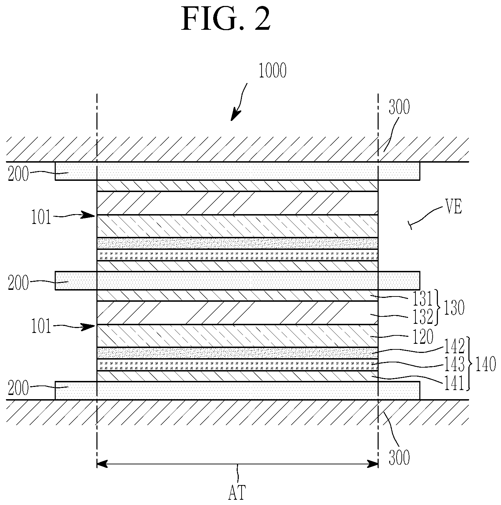

FIG. 2 is a cross-sectional view of an all-solid battery including a precipitation-type negative according to another embodiment.

Referring to FIG. 2, the precipitation-type negative electrode 140 of the plurality of unit cells 101 stacked in one direction may include a negative current collector 141 and a negative coating layer 142 positioned on the current collector. In an all-solid battery having the precipitation-type negative electrode 140, initial charging begins in the absence of a negative active material, and during the charging, lithium metal with a high density or the like is precipitated between the negative current collector 141 and the negative coating layer 142 and forms a lithium metal layer 143, which can serve as a negative active material. Accordingly, in an all-solid battery that has been charged once or more, the precipitation-type negative electrode 140 may include the negative current collector 141, the lithium metal layer 143 positioned on the negative current collector 141, and the negative coating layer 142 positioned on the lithium metal layer 143. The lithium metal layer 143 refers to a layer of lithium metal or the like precipitated during the charging process of the battery and may be called a metal layer or a negative active material layer.

The negative coating layer 142 may be referred to as a lithium electrodeposition induction layer, or a negative catalyst layer, and may include metal, carbon material, or a combination thereof that acts as a catalyst.

The metal may be a lithium-friendly metal, and may include, for example, gold, platinum, palladium, silicon, silver, aluminum, bismuth, tin, zinc, or a combination thereof, and may consist of one or several of these. It may be composed of several types of alloy. When the metal is present in the form of a particle, an average particle diameter (D50) thereof may be about 4 µm or less, for example, 10 nm to 4 µm.

The carbon material may be, for example, crystalline carbon, amorphous carbon, or a combination thereof. The crystalline carbon may be, for example, natural graphite, artificial graphite, a mesophase carbon microbead, or a combination thereof. The amorphous carbon may be, for example, carbon black, activated carbon, acetylene black, Denka black, Ketjen black, or a combination thereof.

When the negative coating layer 142 includes both the metal and the carbon material, a mixing ratio of the metal and the carbon material may be, for example, 1:10 to 2:1 by weight ratio. In this case, the precipitation of lithium metal can be effectively promoted and the characteristics of the all-solid rechargeable battery can be improved. The negative coating layer 142 may include, for example, a carbon material on which catalyst metal is supported, or a mixture of metal particles and carbon material particles.

The negative coating layer 142 may include, for example, a lithium-friendly metal and amorphous carbon, and in this case, it may effectively promote precipitation of lithium metal. For example, the negative coating layer 142 may include a composite material in which a lithium-friendly metal is supported on amorphous carbon.

The negative electrode coating layer 142 may further include a binder, and the binder may be a conductive binder. Furthermore, the negative coating layer 142 may further include general additives such as a filler, a dispersant, and an ion conductive material.

The thickness of the negative coating layer 142 may be, for example, 100 nm to 20 µm, or 500 nm to 10 µm, or 1 µm to 5 µm.

The precipitation-type negative electrode 140 may further include a thin film on the surface of the current collector, that is, between the current collector and the negative electrode coating layer.

The thin film may include an element that can form an alloy with lithium. The element that can form an alloy with lithium may be, for example, gold, silver, zinc, tin, indium, silicon, aluminum, bismuth, and the like, which may be used alone or as an alloy of more than one thereof. The thin film can further planarize a precipitation shape of the lithium metal layer 143 and further improve the characteristics of the all-solid-state battery. The thin film may be formed by, for example, a vacuum deposition method, a sputtering method, a plating method, or the like. The thin film may have a thickness ranging from 1 nm to 500 nm, for example.

The lithium metal layer 143 may include lithium metal or lithium alloy. The lithium alloy, for example, may include a Li-Al alloy, a Li-Sn alloy, a Li-In alloy, a Li-Ag alloy, a Li-Au alloy, a Li-Zn alloy, a Li-Ge alloy, a Li-Si alloy, etc.

The thickness of the lithium metal layer 143 may be 1 µm to 500 µm, 1 µm to 200 µm, 1 µm to 100 µm, or 1 µmm to 50 µm. If the thickness of the lithium metal layer 143 is too thin, it is difficult to perform the role of lithium storage, and if it is too thick, the performance may be deteriorated as a battery volume increases.

When applying this precipitation-type negative electrode, the negative coating layer 142 may play a role in protecting the lithium metal layer 143 and suppressing the precipitation growth of a lithium dendrite. Accordingly, a short circuit and capacity deterioration of the all-solid battery may be suppressed and the lifespan characteristic may be improved.

### A positive electrode

An embodiment includes a current collector and a positive active material layer positioned on the current collector, and the positive active material layer includes a positive active material and a solid electrolyte and may selectively include a binder and/or conductive material.

### A positive active material

The positive active material can be applied without limitation as long as it is commonly used for all-solid-state secondary batteries. For example, the positive active material may be a compound capable of reversible intercalation and deintercalation of lithium and may include a compound represented by any of the following chemical formulas.

LiₐA_{1-b}X_{b}D₂(0.90 ≤ a ≤ 1.8, 0 ≤ b ≤ 0.5);

LiₐA_{1-b}X_{b}O_{2-c}D_{c}(0.90 ≤ a ≤ 1.8, 0 ≤ b ≤ 0.5, 0 ≤ c ≤ 0.05);

LiₐE_{1-b}X_{b}O_{2-c}D_{c}(0.90 ≤ a ≤ 1.8, 0 ≤ b ≤ 0.5, 0 ≤ c ≤ 0.05);

LiₐE_{2-b}X_{b}O_{4-c}D_{c}(0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤ 1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α <2);

LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 < α <2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂O₅; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2);

LiₐFePO₄ (0.90 ≤ a ≤ 1.8).

In the above formulas, A is selected from the group consisting of Ni, Co, Mn, and a combination thereof; X is selected from the group consisting of Al, Ni, Co, Mn, Cr, Fe, Mg, Sr, V, rare earth elements, and a combination thereof; D is selected from the group consisting of O, F, S, P, and a combination thereof; E is selected from the group consisting of Co, Mn, and a combination thereof; T is selected from the group consisting of F, S, P, and a combination thereof; G is selected from the group consisting of Al, Cr, Mn, Fe, Mg, La, Ce, Sr, V, and a combination thereof; Q is selected from the group consisting of Ti, Mo, Mn, and a combination thereof; Z is selected from the group consisting of Cr, V, Fe, Sc, Y, and a combination thereof; and J is selected from the group consisting of V, Cr, Mn, Co, Ni, Cu, and a combination thereof.

The positive electrode active material may be, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), and lithium nickel manganese oxide (NM), lithium manganese oxide (LMO), or lithium ferrous phosphate oxide (LFP).

The positive active material, for example, may include a lithium nickel-based oxide represented by Chemical Formula 11, a lithium cobalt-based oxide represented by Chemical Formula 12, a lithium phosphoric acid iron-based compound represented by Chemical Formula 13, and a cobalt-free lithium nickel-manganese-based oxide represented by Chemical Formula 14, or a combination thereof.

[Chemical Formula 11] Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, 0≤b1≤0.1, M¹ and M² are each one or more elements independently selected from a group consisting of Al, B, Ba, Ca, Ce, Co, Cr, Cu, Fe, Mg, Mn, Mo, Nb, Si, Sn, Sr, Ti, V, W, and Zr, and X is one or more elements selected from a group consisting of F, P, and S.

In Chemical Formula 11, it may be that 0.6≤x1≤1, 0≤y1≤0.4, 0≤z1≤0.4, or 0.8≤x1≤1, 0≤y1≤0.2, 0≤z1≤0.2.

[Chemical Formula 12] Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, 0≤b2≤0.1, M³ is one or more element selected from a group consisting of Al, B, Ba, Ca, Ce, Cr, Cu, Fe, Mg, Mn, Mo, Ni, Se, Si, Sn, Sr, Ti, V, W, Y, Zn, and Zr, and X is one or more element selected from a group consisting of F, P, and S.

[Chemical Formula 13] Liₐ₃Feₓ₃M⁴_{y3}PO_{4-b3}X_{b3}

In Chemical Formula 13, 0.9≤a3≤1.8, 0.6≤x3≤1, 0≤y3≤0.4, 0≤b3≤0.1, M⁴ is one or more element selected from a group consisting of Al, B, Ba, Ca, Ce, Co, Cr, Cu, Mg, Mn, Mo, Ni, Se, Si, Sn, Sr, Ti, V, W, Y, Zn, and Zr, and X is one or more elements selected from a group consisting of F, P, and S.

[Chemical Formula 14] Liₐ₄Niₓ₄Mn_{y4}M⁵_{z4}O_{2-b4}X_{b4}

In Chemical Formula 14, 0.9≤a2≤1.8, 0.8≤x4<1, 0<y4≤0.2, 0≤z4≤0.2, 0.9≤x4+y4+z4≤1.1, 0≤b4≤0.1, M⁵ is one or more element selected from a group consisting of Al, B, Ba, Ca, Ce, Cr, Fe, Mg, Mo, Nb, Si, Sn, Sr, Ti, V, W, and Zr, and X is one or more element selected from a group consisting of F, P, and S.

An average particle diameter (D50) of the positive electrode active material may be 1 µm to 25 µm, for example, 3 µm to 25 µm, 1 µm to 20 µm, 1 µm to 18 µm, 3 µm to 15 µm, or 5 µm to 15 µm. For example, the positive active material may include elementary particles with the average particle diameter D50 of 1 µm to 9 µm and large particles with the average particle diameter D50 of 10 µm to 25 µm. The positive electrode active material having the particle diameter range can be harmoniously mixed with other components in the first positive electrode active material layer and can implement the high capacity and high energy density. Here, the average particle diameter may be by selecting about 20 particles randomly from a scanning electron microscope image of the positive active material, measuring the particle diameter (a diameter, a long diameter or length of a major axis) and then obtaining a particle size distribution, and taking the diameter D50 of particles with a cumulative volume of 50 volume% is taken as the average particle diameter in the particle size distribution.

The positive electrode active material may be in the form of a secondary particle made by agglomeration of a plurality of primary particles, or may be in the form of a single particle. In addition, the positive electrode active material may be spherical or close to a spherical shape, or may be polyhedral or amorphous.

Meanwhile, the positive active material may include a buffer layer on the particle surface. The buffer layer may be expressed as a coating layer, a protective layer, etc., and may play a role in lowering the interface resistance of the positive active material and the sulfide-based solid electrolyte particle. For example, the buffer layer may include lithium-metal-oxide, where the metal may be one or more elements selected from a group consisting of, for example, Al, B, Ca, Ce, Cr, Fe, Mg, Mo, Nb, Si, Sn, Sr, Ta, V, W, and Zr. The lithium-metal-oxide is excellent for improving the performance of the positive active materials by facilitating a movement of lithium ions and electron conduction, while lowering the interface resistance between the positive active material and the solid electrolyte particle.

The positive active material may be included at 55 wt% to 99 wt%, for example 65 wt% to 95 wt%, or 75 wt% to 91 wt% for 100 wt% of the positive active material layer.

### A solid electrolyte

The solid electrolyte included in the positive active material layer may include a sulfide-based solid electrolyte, an oxide-based solid electrolyte, or a combination thereof, for example an argyrodite-type sulfide-based solid electrolyte. Since the contents of the solid electrolyte are the same as described above, the detailed explanation is omitted.

For 100 wt% of the positive active material layer, the solid electrolyte may be included at 0.1 wt% to 35 wt%, for example, 1 wt% to 35 wt%, 5 wt% to 30 wt%, 8 wt% to 25 wt%, or 10 wt% to 20 wt%.

Also, in the positive active material layer, for the total weight of the positive active material and the solid electrolyte, the positive active material at 65 wt% to 99 wt% and the solid electrolyte at 1 wt% to 35 wt% may be included, for example, the positive active material at 80 wt% to 90 wt% and the solid electrolyte at 10 wt% to 20 wt% may be included. When the solid electrolyte is included in the positive electrode with these contents, the efficiency and lifespan characteristics of the all-solid battery may be improved without deteriorating the capacity.

### Binder

The binder serves to well adhere the positive electrode active material particles to each other and to well adhere the positive electrode active material to the current collector, a representative example of the binder may be polyvinyl alcohol, carboxymethylcellulose, hydroxypropyl cellulose, diacetyl cellulose, polyvinyl chloride, carboxylated polyvinyl chloride, polyvinyl fluoride, polymer including ethylene oxide, polyvinylpyrrolidone, polyurethane, polytetrafluoroethylene, polyvinylidene fluoride, polyethylene, polypropylene, styrene-butadiene rubber, acryl federated styrene-butadiene rubber, epoxy resin, and nylon, but it is not limited thereto.

The content of the binder in the positive active material layer may be approximately 0.1 wt% to 5 wt% for 100 wt% of the positive active material layer.

### A conductive material

The positive active material layer may further include a conductive material. The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, carbon fiber, carbon nanotubes, and the like; a metal-based material having a shape of a metal powder or a metal fiber including copper, nickel, aluminum, silver, or the like; a conductive polymer such as a polyphenylene derivative; or a mixture thereof.

The content of the conductive material in the positive active material layer may be 0 wt% to 3 wt%, 0.01 wt% to 2 wt%, or 0.1 wt% to 1 wt% with respect to 100 wt% of the positive active material layer.

Aluminum foil may be used as the positive current collector, but it is not limited thereto.

The all-solid rechargeable battery may be a unit battery with a structure of the positive electrode/solid electrolyte layer/negative electrode, a bicell with a structure of the negative electrode/solid electrolyte layer/anode/solid electrolyte layer/negative electrode, or a stacked battery in which these structures are repeated.

A shape of the all-solid-state battery is not particularly limited, and may be, for example, a coin shape, a button shape, a sheet shape, a stack shape, a cylindrical shape, a flat shape, or the like. In addition, the all-solid-state battery can also be applied to large-sized batteries used in electric vehicles, and the like. For example, the all-solid-state battery can also be used in a hybrid vehicle such as a plug-in hybrid electric vehicle (PHEV). Furthermore, it can be used in fields that require a large amount of power storage, and can also be used with an electric bicycle, an electric tool, or the like. In addition, the all-solid rechargeable battery can be used in various fields such as portable electronic devices.

Below are experimental examples and comparative examples of the present disclosure. The embodiment described below is only an example of the present disclosure, and the present disclosure is not limited to the embodiment described below.

### Experimental Example 1

### 1. Manufacturing of an elastic sheet

4-hydroxybutyl acrylate (4-HBA, Osaka Organic Chemical), 2-ethylhexyl acrylate (2-EHA, LG Chemical), and isobornyl acrylate (IBOA, Osaka Organic Chemical) are mixed with a weight ratio of 25:65:10, 0.01 parts by weight of a photoinitiator (Irgacure 651) is added here and a dissolved oxygen is exchanged into nitrogen gas in the reactor, and then ultraviolet rays are irradiated for several minutes using a lamp with a UV intensity of 10 mw/cm² to partially polymerize a monomer, thereby preparing an acrylate polymer resin.

As an elasticity particle, being manufactured using an emulsion polymerization method, as a core-shell particle composed of 70 wt% of poly butyl acrylate core and 30 wt% of polymethylmethacrylate shell, an organic nano particle with an average particle diameter of 200 nm is prepared.

100 parts by weight of the prepared acrylate polymer resin, 2 parts by weight of the elasticity particles, and 0.01 parts by weight of the initiator (Irgacure 651) were mixed in the reactor. In a viscous liquid, an initiator (Irgacure 651) (0.3 parts by weight), hexanediol diacrylate as a cross-linking agent (0.1 parts by weight), hollow particles (glass bubbles; 3MTM K1, median particle diameter 65 µm) (4 parts by weight), and fumed silica (AEROSIL 200) 0.1 (parts by weight) was mixed to prepare an adhesive elastic sheet composition.

The elastic sheet composition is applied between polyethylene terephthalate (PET) films of a releasing film, and irradiated with a light dose of 2000 mJ/cm² using ultraviolet rays to produce an elastic sheet adhered on the PET film. The thickness of the elastic sheet (Sheet A) manufactured according to experimental Example 1 is 300 µm, and the strain is 2 %, which is less than 10 % in a vacuum environment of 0.1 MPa.

### 2. Manufacturing of a positive electrode

LiNi_{0.8}Co_{0.15}Mn_{0.05}O₂ positive active material (85 wt%) coated with Li₂O-ZrO₂, lithium argyrodite-type solid electrolyte Li₆PS₅Cl (13.5 wt%), polyvinylidene fluoride binder (1.0 wt%), and a carbon nanotube conductive material (0.5 wt%) are mixed to manufacture a positive composition. The prepared positive composition is coated on a positive current collector by using a bar coater, dried, and rolled to produce a positive electrode.

### 3. Manufacturing of a solid electrolyte layer

A slurry is prepared by adding an argyrodite-type solid electrolyte Li₆PS₅Cl (D50=3 µm) to a binder solution in which acryl-based binder (SX-A334, Zeon) is dissolved in isobutyryl isobutyrate (IBIB) solvent and stirring it. The slurry includes 98.5 wt% of a solid electrolyte and 1.5 wt% of a binder. The slurry is applied on a release PET film with a bar coater and dried at room temperature to produce a solid electrolyte layer.

### 4. Manufacturing of a negative electrode

An Ag/C composite is prepared by mixing carbon black with a primary particle diameter D50 of about 30 nm and silver (Ag) with an average particle diameter D50 of about 60 nm at a weight ratio of 3:1, and a negative coating layer composition is prepared by adding and mixing 0.25 g of the composite to 2 g of an NMP solution including 7 wt% of polyvinylidene fluoride binder. This is coated to a nickel foil current collector by using a bar coater and vacuum-dried to prepare a precipitation-type of negative electrode with a negative coating layer formed on the current collector.

### 5. Manufacturing of an all-solid battery

A plurality of unit cells stacked in one direction are manufactured by stacking them in the order of the negative electrode/solid electrolyte/positive electrode/solid electrolyte/negative electrode. The unit cells are placed inside a case including an aluminum case stack film, etc., a vacuum environment of 0.1 MPa is formed inside the case, and then pressurized to produce an all-solid rechargeable battery unit cell. The aluminum case is unpacked and stacked in the following order of the elastic sheet/negative electrode/solid electrolyte/positive electrode/solid electrolyte/negative electrode/elastic sheet/negative electrode/solid electrolyte/positive electrode /solid electrolyte/negative electrode/elastic sheet. Next, a 0.1 MPa vacuum environment is formed inside the aluminum stack film, and the stacked cells are stored to manufacture an all-solid rechargeable battery.

The thickness of the elastic sheet (Sheet A) according to Experimental Example 1 is 300 µm, and in the vacuum environment of 0.1 MPa inside the case, the strain of the elastic sheet is 2 %, which is less than 10 %.

### Experimental Example 2

The elastic sheet and all-solid rechargeable battery according to Experimental Example 2 are manufactured using substantially the same method as Experimental Example 1. The thickness of the elastic sheet (Sheet B) according to Experimental Example 2 is 300 µm, and in the vacuum environment of 0.1 MPa inside the case, the strain of the elastic sheet is 3 %, which is less than 10 %. Experimental Example 2 may manufacture the elastic sheet by increasing the porosity of the elastic sheet compared to Experimental Example 1, but is not limited to this.

### Experimental Example 3

The elastic sheet and all-solid rechargeable battery according to Experimental Example 3 are manufactured using substantially the same method as Experimental Example 1. The thickness of the elastic sheet (Sheet C) according to Experimental Example 3 is 300 µm, and in the vacuum environment of 0.1 MPa inside the case, the strain of the elastic sheet is 10. Experimental Example 3 may manufacture the elastic sheet by increasing the porosity of the elastic sheet compared to Experimental Example 1, but is not limited to this.

### Comparative Example 1

An elastic sheet and an all-solid rechargeable battery according to Comparative Example 1 are manufactured using substantially the same method as Experimental Example 1. The thickness of the elastic sheet (Comparative Example 1) according to Comparative Example 1 is 300 µm, and in the vacuum environment of 0.1 MPa inside the case, the strain of the elastic sheet is 16 %, which is more than 10 %. Comparative Example 1 may manufacture the elastic sheet by increasing the porosity of the elastic sheet compared to Experimental Example 1, but is not limited to this.

### Experiment Result 1

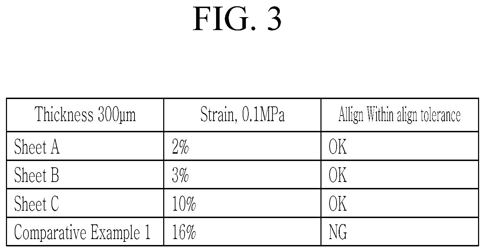

FIG. 3 is a table showing experimental results confirming alignment distortion results of Experimental Example 1, Experimental Example 2, Experimental Example 3, and Comparative Example 1.

Referring to FIG. 3, in each all-solid rechargeable battery according to Experimental Example 1 (Sheet A), Experimental Example 2 (Sheet B), Experimental Example 3 (Sheet C), and Comparative Example 1, it was confirmed that the plurality of unit cells stacked in one direction were positioned within the alignment tolerance in a vacuum environment of 0.1 MPa.

The all-solid rechargeable battery according to Experimental Example 1 (Sheet A), Experimental Example 2 (Sheet B), and Experimental Example 3 (Sheet C) satisfy the numerical constraints of the elastic sheet thickness of 300 µm and the strain of the elastic sheet of 10 % or less in a vacuum environment of 0.1 MPa, and accordingly in the vacuum environment of 0.1 MPa, the plurality of unit cells stacked in one direction were positioned within the align tolerance.

In contrast, in the all-solid rechargeable battery according to Comparative Example 1, the thickness of the elastic sheet is 300 µm, and the strain of the elastic sheet is 16 %, which is more than 10 % in a vacuum environment of 0.1 MPa, the plurality of unit cells stacked in one direction caused the alignment distortion and exceeded the alignment tolerance in the vacuum environment of 0.1 MPa due to the deformation of the elastic sheet placed between them.

According to Experimental Result 1, by alleviating the stress transmitted to the all-solid unit cell and the stress generated in the all-solid unit cell when charging and discharging are repeated, to implement the task and effect of suppressing the alignment distortion of the all-solid unit cells stacked in one direction while suppressing the damage to all-solid unit cells and improving the charge and discharge efficiency and lifespan characteristics of the all-solid rechargeable batteries, it may be confirmed that the numerical limit configuration in which the thickness of the elastic sheet is 300 µm and the strain of the elastic sheet is less than 10 % in the vacuum environment of 0.1 MPa, referring to FIG. 3, has a threshold significance that may confirm that the upper limit is the threshold value through Experimental Example 1 (Sheet A), Experimental Example 2 (Sheet B), Experimental Example 3 (Sheet C), and Comparative Example 1.

For example, if the strain of the elastic sheet is less than 1 % in a vacuum environment of 0.1 MPa, the stress relief effect on the plurality of unit cells may be deteriorated due to the deformation of the elastic sheet.

### Experimental Example 4

The elastic sheet and all-solid rechargeable battery according to Experimental Example 4 were manufactured using substantially the same method as Experimental Example 1. The thickness of the elastic sheet (Sheet D) according to Experimental Example 4 is 100 µm, and in a vacuum environment of 0.1 MPa inside the case, the strain of the elastic sheet is 30 %, that is, 30 % or less. Experimental Example 4 may manufacture the elastic sheet by increasing the porosity of the elastic sheet compared to Experimental Example 1, but is not limited to this.

### Comparative Example 2

An elastic sheet and an all-solid rechargeable battery according to Comparative Example 2 were manufactured using substantially the same method as Experimental Example 1. The thickness of the elastic sheet according to Comparative Example 2 is 100 µm, and in a vacuum environment of 0.1 MPa inside the case, the strain of the elastic sheet is 50 %, which is more than 30 %. Comparative Example 2 may manufacture the elastic sheet by increasing the porosity of the elastic sheet compared to Experimental Example 1, but is not limited to this.

### Experimental Result 2

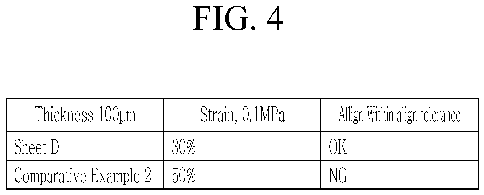

FIG. 4 is a table showing experimental results confirming alignment distortion results of Experimental Example 4 and Comparative Example 2.

Referring to FIG. 4, in each all-solid rechargeable battery according to Experimental Example 4 (Sheet D) and Comparative Example 2, it was confirmed that the plurality of unit cells stacked in one direction were positioned within the alignment tolerance in a vacuum environment of 0.1 MPa.

The all-solid rechargeable battery according to Experimental Example 4 (Sheet D) has the elastic sheet thickness of 100 µm and satisfies the numerical limit of the strain of the elastic sheet being 30 % or less in a 0.1 MPa vacuum environment, so the plurality of unit cells stacked in one direction in the 0.1 MPa vacuum environment were positioned within the alignment tolerance.

In contrast, in the all-solid rechargeable battery according to Comparative Example 2, since the thickness of the elastic sheet is 100 µm, and the strain of the elastic sheet is 50 %, which is more than 30 % in a vacuum environment of 0.1 MPa, the plurality of unit cells stacked in one direction in a vacuum environment of 0.1 MPa were out of the alignment tolerance due to the alignment distortion occurring due to the deformation of the elastic sheet placed between them.

According to Experimental Result 2, by alleviating the stress transmitted to the all-solid unit cell and the stress generated in the all-solid unit cell when charging and discharging are repeated, to implement the task and effect of suppressing the alignment distortion of the all-solid unit cells stacked in one direction while suppressing the damage to all-solid unit cells and improving the charge and discharge efficiency and lifespan characteristics of the all-solid rechargeable batteries, it may be confirmed that the numerical limit configuration in which the thickness of the elastic sheet is 300 µm and the strain of the elastic sheet is less than 30 % in the vacuum environment of 0.1 MPa, referring to FIG. 3, has a threshold significance that may confirm that the upper limit is the threshold value through Experimental Example 4 (Sheet D) and Comparative Example 2.

### Experimental Example 5

An elastic sheet and an all-solid rechargeable battery according to an Experimental Example 5 were manufactured using substantially the same method as Experimental Example 1. The thickness of the elastic sheet (Sheet E) according to Experimental Example 5 is 500 µm, and in a vacuum environment of 0.1 MPa inside the case, the strain of the elastic sheet is 5 %, which is 5 % or less. Experimental Example 5 may manufacture the elastic sheet by increasing the porous of the elastic sheet compared to Experimental Example 1, but is not limited to this.

### Comparative Example 3

An elastic sheet and an all-solid rechargeable battery according to Comparative Example 3 were manufactured using substantially the same method as Experimental Example 1. The thickness of the elastic sheet according to Comparative Example 3 is 500 µm, and in a vacuum environment of 0.1 MPa inside the case, the strain of the elastic sheet is 10 %, which is more than 5 %. Comparative Example 3 may manufacture the elastic sheet by increasing the porous of the elastic sheet compared to Experimental Example1, but is not limited to this.

### Experimental Result 3

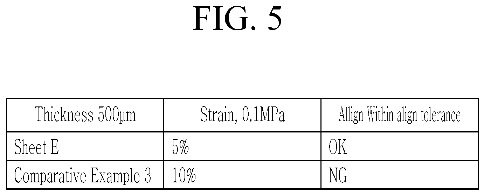

FIG. 5 is a table showing experimental results confirming alignment distortion results of Experimental Example 5 and Comparative Example 3.

Referring to FIG. 5, In each of the all-solid rechargeable batteries according to Experimental Example 5 (Sheet E) and Comparative Example 3, it was confirmed that the plurality of unit cells stacked in one direction were positioned within the alignment tolerance in a vacuum environment of 0.1 MPa.

The all-solid rechargeable battery according to Experimental Example 5 (Sheet E) satisfies the numerical limit that the elastic sheet thickness is 500 µm and the strain of the elastic sheet is 5 % or less in a 0.1 MPa vacuum environment, so the plurality of unit cells stacked in one direction were positioned within the align tolerance in a vacuum environment of 0.1 MPa.

In contrast, since the all-solid rechargeable battery according to the Comparative Example 3 has the elastic sheet thickness of 500 µm, and the strain of the elastic sheet is 10 %, which is more than 5 % in a vacuum environment of 0.1 MPa, the plurality of unit cells stacked in one direction in a vacuum environment of 0.1 MPa were out of the alignment tolerance due to the alignment distortion occurring due to the deformation of the elastic sheet placed between them.

According to Experimental Result 3, by alleviating the stress transmitted to the all-solid unit cell and the stress generated in the all-solid unit cell when charging and discharging are repeated, to implement the task and effect of suppressing the alignment distortion of the all-solid unit cells stacked in one direction while suppressing the damage to all-solid unit cells and improving the charge and discharge efficiency and lifespan characteristics of the all-solid rechargeable batteries, it may be confirmed the numerical limit configuration that the thickness of the elastic sheet is 500 µm and the strain of the elastic sheet is less than 5 % in the vacuum environment of 0.1 MPa, referring to FIG. 5, has a threshold significance that may confirm that the upper limit is the threshold value through Experimental Example 5 (Sheet A) and Comparative Example 3.

According to the above-mentioned Experimental Result 1, Experimental Result 2, and Experimental Result 3, by alleviating the stress transmitted to the all-solid unit cell and the stress generated in the all-solid unit cell when charging and discharging are repeated, to implement the task and effect of suppressing the alignment distortion of the all-solid unit cells stacked in one direction while suppressing the damage to all-solid unit cells and improving the charge and discharge efficiency and lifespan characteristics of the all-solid rechargeable batteries, it may be confirmed that the numerically limited configuration in which the thickness of the elastic sheet is 100 µm to 500 µm and that the strain of the elastic sheet is less than 10 % in a vacuum environment of 0.1 MPa has a threshold significance that may confirm that the upper limit is the threshold value through Experimental Example 1 (Sheet A), Experimental Example 2 (Sheet B), Experimental Example 3 (Sheet C), Experimental Example 4 (Sheet D), Experimental Example 5 (Sheet E), Comparative Example 1, Comparative Example 2, and Comparative Example 3.

While this disclosure has been described in connection with what is presently considered to be practical example embodiments, it is to be understood that the disclosure is not limited to the disclosed embodiments. On the contrary, it is intended to cover various modifications and equivalent arrangements included within the scope of the appended claims.

### [Description of symbols]

| | | | |
|---|---|---|---|
| 100: | unit cell | 130: | positive electrode |
| 131: | positive current collector | 132: | positive active material layer |
| 120: | solid electrolyte layer | 110: | negative electrode |
| 111: | negative current collector | 112: | negative active material layer |
| 140: | precipitation-type negative electr ode | 143 | : lithium metal layer |
| 142: | negative coating layer | 200: | elasticity layer |

## Claims

1. An elastic sheet for an all-solid rechargeable battery with a thickness of 100 µm to 500 µm and a strain of 10 % or less in a vacuum environment of 0.1 MPa.

2. The elastic sheet for the all-solid rechargeable battery as claimed in claim 1, wherein
the thickness of the elastic sheet for the all-solid rechargeable battery is 300 µm.

3. The elastic sheet for the all-solid rechargeable battery as claimed in claim 1, wherein
the strain comprises a strain of a width of the elastic sheet for the all-solid rechargeable battery.

4. The elastic sheet for the all-solid rechargeable battery as claimed in claim 1, wherein
the elastic sheet for the all-solid rechargeable battery comprises a foam.

5. The elastic sheet for the all-solid rechargeable battery as claimed in claim 1, wherein
the elastic sheet for the all-solid rechargeable battery comprises a polymer resin, and
the polymer resin comprises a polyacrylate, a polyurethane, silicon, a fluorine polymer, a polyether polyol, a polyester polyol, a polycarbonate polyol, a copolymer thereof, or combinations thereof.

6. The elastic sheet for the all-solid rechargeable battery as claimed in claim 5, wherein
the polyacrylate comprises a C1 to C20 alkyl acrylate, a hydroxy-substituted C1 to C20 alkyl acrylate, or a combination thereof.

7. The elastic sheet for the all-solid rechargeable battery as claimed in claim 5, wherein
the elastic sheet for the all-solid rechargeable battery further comprises hollow particles.

8. The elastic sheet for the all-solid rechargeable battery as claimed in claim 7, wherein
the hollow particles are included in an amount of 1 part by weight to 8 parts by weight, based on 100 parts by weight of the polymer resin.

9. The elastic sheet for the all-solid rechargeable battery as claimed in claim 7, wherein
the hollow particles comprise inorganic hollow particles, organic hollow particles, or a combination thereof,
the inorganic hollow particles comprise glass, a metal oxide, a metal carbide, a metal fluoride, or a combination thereof, and
the organic hollow particles comprise an acryl resin, a vinyl chloride resin, a urea resin, a phenol resin, or a combination thereof.

10. The elastic sheet for the all-solid rechargeable battery as claimed in claim 7, wherein
an average particle diameter D50 of the hollow particles is 2 µm to 100 µm.

11. The elastic sheet for the all-solid rechargeable battery as claimed in claim 5, wherein
the elastic sheet for the all-solid rechargeable battery further comprises elastic particles, and
the elastic particles comprise alkyl acrylate, an olefin, butadiene, isoprene, styrene, acrylonitrile, a copolymer thereof, or combinations thereof.

12. The elastic sheet for the all-solid rechargeable battery as claimed in claim 11, wherein
the elasticity particle is included in an amount of 0.1 parts by weight to 5 parts by weight, based on 100 parts by weight of the polymer resin.

13. The elastic sheet for the all-solid rechargeable battery as claimed in claim 11, wherein
an average particle diameter D50 of the elastic particle is 10 nm to 900 nm.

14. The elastic sheet for the all-solid rechargeable battery as claimed in claim 5, wherein
the elastic sheet for the all-solid rechargeable battery further comprises inorganic particles, and
the inorganic particles comprise alumina, titania, boehmite, sulfuric barium acid, calcium carbonate, phosphoric acid calcium, amorphous silica, mesoporous silica, fumed silica, crystalline glass particles, kaolin, talc, silica-alumina composite oxide particles, calcium fluoride, lithium fluoride, zeolite, molybdenum sulfide, mica, magnesium oxide, or combinations thereof.

15. The elastic sheet for the all-solid rechargeable battery as claimed in claim 14, wherein
the inorganic particles are included in an amount of 0.001 parts by weight to 50 parts by weight, based on 100 parts by weight of the polymer resin.

16. The elastic sheet for the all-solid rechargeable battery as claimed in claim 5, wherein
the elastic sheet for the all-solid rechargeable battery further comprises an additive, and
the additive comprises an initiator, a cross-linking agent, a coupling agent, a stabilizer, an inert gas, or a combination thereof.

17. An elastic sheet for an all-solid rechargeable battery, the elastic sheet having:
a thickness of 100 µm and
a strain of 30 % or less in a vacuum environment of 0.1 MPa.

18. An elastic sheet for an all-solid rechargeable battery, the elastic sheet having:
a thickness of 500 µm and
a strain of 5 % or less in a vacuum environment of 0.1 MPa.

19. An all-solid rechargeable battery comprising:
a plurality of unit cells comprising a solid electrolyte layer stacked in one direction; and
the elastic sheet for the all-solid rechargeable battery of any one as claimed in claim 1 to claim 18 between the plurality of unit cells.

20. The all-solid rechargeable battery as claimed in claim 19, further comprising
a case accommodating the plurality of unit cells and the elastic sheet for the all-solid rechargeable battery, the case maintaining the plurality of unit cells and the elastic sheet at a vacuum environment of 0.1 MPa.
